# EUROPEAN PATENT APPLICATION

(11) **EP 1 596 545 A2**
(43) Date of publication of application: **16.11.2005**
(21) Application number: 05252278.6
(22) Date of filing: 12.04.2005
(51) Int. Cl.: H04L 12/56

(54) **Interconnecting WPAN piconets**

(30) Priority: 13.04.2004 KR 2004025415
(71) Applicant: SAMSUNG ELECTRONICS CO., LTD., Suwon-si, Gyeonggi-do (KR)
(72) Inventor: An, Cheol-Hong, c/o 248-806 Ssangyong APT., Suwon-si Gyeonggi-do (KR)
(74) Representative: Brandon, Paul Laurence

(57) **Abstract**

A network device configured to allow a first network communication device (430) belonging to a first wireless network (420) to communicate with second network communication devices (465) belonging to a second wireless network (460) is described. The network device includes a controller that creates a wireless packet (500) carrying a predetermined protocol data unit comprising a data frame region and an information frame region, the protocol data unit including first and second device identification (ID) information identifying the first and second network communication devices (430, 465), respectively, and first and second network ID information identifying the first and second wireless networks (420, 430), respectively, and a transmitter that transmits the created wireless packet.

## Description

The present invention relates to a system and method for a wireless network, and more particularly, to communication between wireless networks in a coordinator-based wireless environment through connection to a wired network.

With the advancement in communication and network technologies, a wired network environment using wired media such as coaxial or optical cables is evolving into a wireless one using wireless signals in various frequency bands. In line with the transition from wired to wireless technology, a computing device that contains a wireless interface module, enables mobility, and performs specific functions by processing various information ("a wireless network device") is being developed and wireless technologies that enable effective communication between wireless devices on a wireless network are emerging.

There are two major architectures of wireless networks: infrastructure and ad-hoc networks.

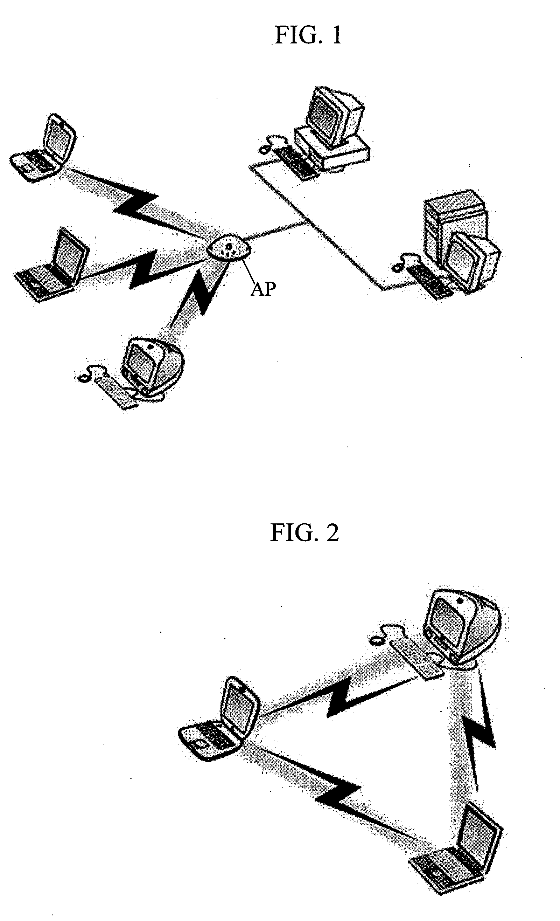

The infrastructure network contains an access point (AP) as shown in FIG. 1 whereas the ad-hoc network requires no AP for communication as shown in FIG. 2.

In an infrastructure mode, an AP not only has connectivity to the wired network but also provides communication among wireless network devices within a wireless network. Thus, all data traffic in the infrastructure network is relayed through the AP.

In an ad-hoc mode, wireless network devices within a single wireless network can directly communicate with one another without using an AP.

Such wireless networks can be further classified into two types based on the presence of a coordinator. In one type of network, which is called a coordinator-based wireless network, a randomly selected wireless device acts as a coordinator that assigns channel time to other wireless devices within the same wireless network for data transmission, and then the other wireless devices are allowed to transmit data only at the assigned time. As compared to the coordinator-based wireless network, the other type of network allows all network devices to transmit data at any time desired without using a coordinator.

The coordinator-based wireless network is a single independent coordinator-centered network. When there are multiple coordinator-based wireless networks within a certain area, each network has a unique ID to distinguish itself from others.

Thus, while wireless devices can transmit/receive data to/from other network devices during channel time assigned by the coordinator on a coordinator-based network where they belong, they are not allowed to communicate with wireless devices belonging to another coordinator-based network.

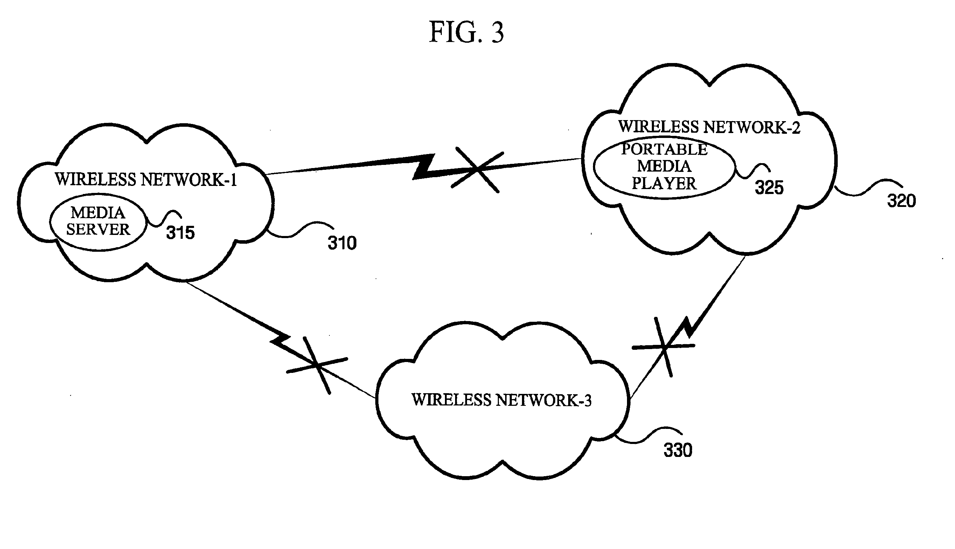

For example, in a home network system containing three coordinator-based wireless networks 310, 320, and 330 as shown in FIG. 3, it is assumed that wireless network-1 310, wireless network-2 320, and wireless network-3 330 are built in a first-floor living room, a second-floor schoolroom, and a first-floor bedroom, respectively.

If a user desires to watch movies stored on a media server 315 in the living room using a portable moving picture player 325 in the schoolroom, then the user cannot watch movies since there is no way to communicate between the wireless network-1 310 and the wireless network-2 320. Thus, to see the movies, the user has to go downstairs to the living room.

This problem may arise due to restriction on range of radio waves, absence of information on another coordinator-based wireless network, and channel time allocation.

It is an aim of preferred embodiments of the present invention to address at least one of the disadvantages of prior art, whether identified herein, or otherwise.

Preferred embodiments of the present invention provide a system and method for enabling data transmission and reception between wireless network devices belonging to different coordinator-based wireless networks by connecting a plurality of different coordinator-based wireless networks via a wired backbone.

According to the present invention there is provided an apparatus and method as set forth in the appended claims. Preferred features of the invention will be apparent from the dependent claims, and the description which follows.

According to an aspect of the present invention, there is provided a network device configured to allow a first network communication device belonging to a first wireless network to communicate with a second network communication devices belonging to a second wireless network, the network device comprising: a controller that creates a wireless packet carrying a predetermined protocol data unit consisting of a data frame region and an information frame region, the protocol data unit including first and second device identification (ID) information identifying the first and second network communication devices, respectively, and first and second network ID information identifying the first and second wireless networks, respectively; and a transmitter that transmits the created wireless packet.

The protocol data unit may comprise a medium access control (MAC) protocol data unit for controlling an access between the network communication devices.

The information frame region preferably includes the first and second device ID information and the first network ID information, and the data frame region comprises the second network ID information.

Preferably, the wireless packet is compliant with the IEEE 802.1.5.3 standard.

The protocol data unit may further include transfer mode information indicating whether the first and second network communication devices belong to the same network.

The transfer mode information is preferably contained in the information frame region.

The transfer mode information may include a first transfer mode in which the first and second network communication devices have the same network ID information and a second transfer mode in which the first and second network communication devices have different network ID information.

According to another aspect of the present invention, there is provided a network bridging device configured to allow a first network communication device belonging to a first wireless network to communicate with second network communication devices belonging to a second wireless network connected via a wired network, the network bridging device comprising: a wireless network interface that receives a wireless packet carrying a predetermined protocol data unit consisting of a data frame region and an information frame region from the first network communication device, the protocol data unit including first and second device identification (ID) information identifying the first and second network communication devices, respectively, and first and second network ID information identifying the first and second wireless networks, respectively; a controller that converts the wireless packet into a wired packet that conforms to a protocol used to operate the wired network; and a wired network interface that transmits the wired packet to the wired network.

Here, the protocol data unit may comprise a medium access control (MAC) protocol data unit for controlling access between the network communication devices.

In addition, the information frame region may include the first and second, device ID information and the first network ID information, and the data frame region comprises the second network ID information.

Here, the wireless packet is preferably compliant with the IEEE 802.15.3 standard.

The protocol data unit may further include transfer mode information indicating whether the first and second network communication devices belong to the same network. In this case, the transfer mode information is preferably contained in the information frame region.

The transfer mode information may include a first transfer mode in which the first and second network communication devices have the same network ID information and a second transfer mode in which the first and second network communication devices have different network ID information.

The controller may discard the wireless packet received from the wireless network interface when transfer mode information is a first transfer mode.

Preferably, the controller converts the wireless packet received from the wireless network interface into the wired packet that conforms to the protocol used to operate the wired network when transfer mode information is a second transfer mode.

The wired network interface may receive a wired packet from the wired network, the controller may convert the received wired packet into a wireless packet that conforms to a protocol used to operate the first wireless network, and the wireless network interface may transmit the wireless packet to the first network communication device. According to still another aspect of the present invention, there is provided a network communication method comprising: transmitting a wireless packet comprising a predetermined protocol data unit consisting of a data frame region and an information frame region in a wireless device, wherein the protocol data unit comprises first device identification (ID) information identifying a first wireless network communication device that transmits the wireless packet, second device ID information identifying a second wireless network communication device that receives the wireless packet, and first and second network ID information identifying first and second wireless networks where the first and second network communication devices belong, respectively; receiving the wireless packet in a bridging device connected to a wired network; converting the wireless packet into a wired packet that conforms to a protocol used to operate the wired network in the bridging device; and transmitting the wired packet to the wired network.

In the network communication method, the protocol data unit may comprise a medium access control (MAC) protocol data unit for controlling access between the network communication devices.

Also, the information frame region may include the first and second device ID information and the first network ID information, and the data frame region comprises the second network ID information.

The wireless packet is preferably compliant with the IEEE 802.15.3 standard.

The protocol data unit may further include transfer mode information indicating whether the first and second network communication devices belong to the same network. In this case, the transfer mode information is preferably contained in the information frame region.

The transfer mode information may include a first transfer mode in which the first and second network communication devices have the same network ID information and a second transfer mode in which the first and second network communication devices have different network ID information.

When transfer mode information is a second transfer mode, the converting of the wireless packet into the wired packet may comprise causing the bridging device to convert the wireless packet into the wired packet that conforms to the protocol used to operate the wired network.

For a better understanding of the invention, and to show how embodiments of the same may be carried into effect, reference will now be made, by way of example, to the accompanying diagrammatic drawings in which:
FIG. 1 is an exemplary diagram of a wireless network system operating in an infrastructure mode;
FIG. 2 is an exemplary diagram of a wireless network system operating in an ad-hoc mode;
FIG. 3 is an exemplary diagram illustrating communication between conventional coordinator-based wireless networks;
FIG. 4 is a diagram of a network system according to an exemplary embodiment of the present invention;
FIG. 5 is a diagram of a data format according to an exemplary embodiment of the present invention;
FIG. 6 is an exemplary diagram illustrating the configurations of a device and a wired/wireless bridge according to an exemplary embodiment of the present invention;
FIG. 7 is a schematic flowchart illustrating the operation of a repeater according to an exemplary embodiment of the present invention; and
FIG. 8 is a detailed flowchart illustrating the operation of a repeater according to an exemplary embodiment of the present invention.

The present invention will now be described more fully with reference to the accompanying drawings, in which exemplary embodiments of this invention are shown. Advantages and features of the present invention and methods of accomplishing the same may be understood more readily by reference to the following detailed description of exemplary embodiments and the accompanying drawings.

The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

Hereinafter, the present invention will be described with references to block diagrams or flowcharts for explaining a system and method for communication between coordinator-based wireless networks. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

The Institute of Electrical and Electronics Engineers (IEEE) 802.15.3 standard proposes standards for a PHY layer corresponding to Physical Layer of the seven layers of the Open System Interconnection (OSI) network model developed by the International Organization for Standardization (ISO) for wireless networks, and a Medium Access Control (MAC) layer corresponding to a Data-link Layer.

To assist in better understanding the present invention, a wireless personal area network (WPAN) compliant with the IEEE 802.15.3, and more particularly, a network system for enabling data communication between wireless network devices belonging to different WPANs by connecting multiple WPANs via a wired backbone at a MAC layer will now be described as an exemplary embodiment of a coordinator-based wireless network.

For consistent use of terms, a wireless network device and a single network created by one or more devices are hereinafter referred to aa a 'device' and a 'piconet', respectively, as defined in a WPAN.

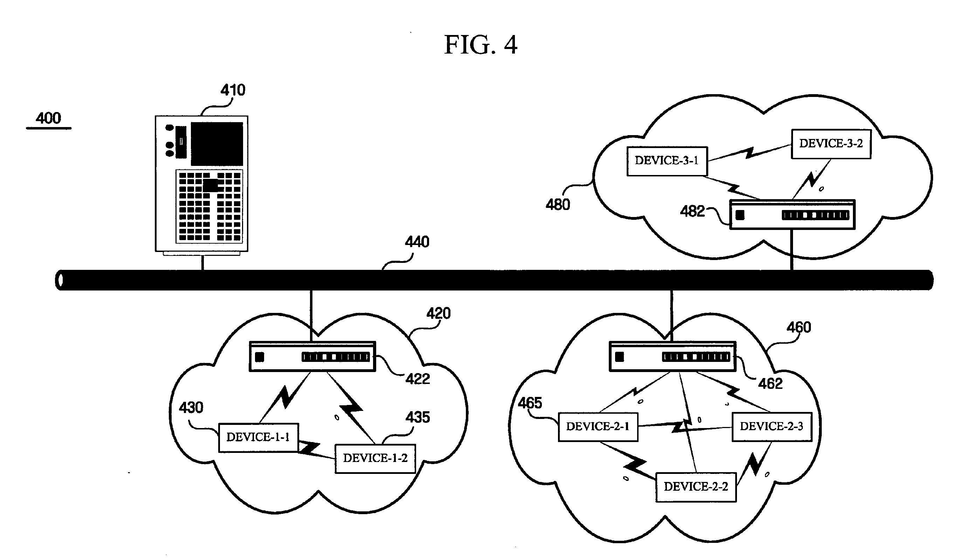

FIG. 4 is a diagram of a network system according to an embodiment of the present invention.

Referring to FIG. 4, a network system 400 is comprised of multiple piconets 420, 460, and 480, a wired network 440 connected to the piconets 420, 460, and 480, and repeaters 422, 462, and 482 that connect the piconets 420, 460, and 480 with the wired network 440, respectively. In this case, for clear distinction, the piconets 420, 460, and 480 are hereinafter called first, second, and third piconets 420, 460, and 480, respectively.

Further, a device acting as a coordinator may be selected among devices belonging to each of the first through third piconets 420, 460, and 480, which is hereinafter called a 'Piconet coordinator' or 'PNC'.

Similarly, to more clearly distinguish the repeaters 422, 462, and 482 belonging to the first through third piconets 420, 460, and 480, they are hereinafter referred to as first, second, and third repeaters 422, 462, and 482, respectively. Each of the first through third repeaters 422, 462, and 482 may include a router, a wired/wireless bridge, a device, or a PNC depending on the type of a network topology. For example, when each of the repeaters 422, 462, and 482 is a wired/wireless bridge, the network system 400 may create an IP subnet such as '192.168.9.x', and each of the first through third piconets 420, 460, and 480 can be identified by its own ID.

The wired network 440 can conform to any wired network protocol based on a communication medium such as coax cable, optical cable, power line, or phone line. The protocol for the wired network 440 may vary depending on a physical environment where the present invention is applied.

According to an exemplary embodiment of the present invention, when a device-1_1 430 desires to communicate with a device-1_2 435, i.e., a communication is made with the same piconet, it has only to comply with a conventional IEEE 802.15.3 standard. However, when the device-1_1 430 wishes to communicate with a device-2_1 465 belonging to the second piconet 460, first, the first repeater 422 receives a wireless packet transmitted by the device-1_1 430 and then generates a wired packet with a structure that is capable of transmitting information contained in the wireless packet. This is because a change in the structure of a communication protocol due to the characteristics of a transmission medium may also cause the structure of a packet to change. The wired packet generated by the first repeater 422 is forwarded to the second repeater 462 through the wired network 440. In this case, the first repeater 422 may broadcast or multicast the wired packet to the second repeater 462 or directly transmit the same only to the second repeater 462.

The second repeater 462 then converts the wired packet received from the first repeater 422 back into the form of a wireless packet compliant with the IEEE 802.15.3 standard, allocates channel time defined in the same standard, and forwards the wireless packet to the device-2 1 465.

A response to the packet transmitted by the device-1_1 430 can be performed between the device-1_1 430 and the first repeater 422, the first repeater 422 and the second repeater 462, the second repeater 462 and the device-2_1 465, or between the device-1_1 430 and the device-2_1 465.

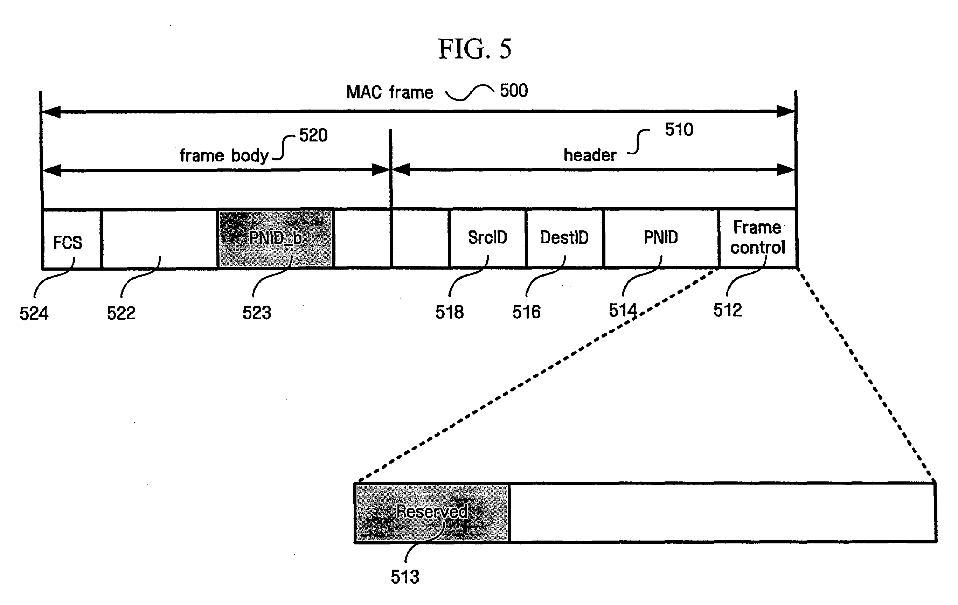

FIG. 5 is a diagram of a data format according to an exemplary embodiment of the present invention.

It is difficult to implement a communication mechanism as described above only with a frame format complaint with the IEEE 802.15.3 standard. Thus, to realize the present invention, the conventional frame format needs to be modified. The extent of modifications to the frame format may vary according to the type of the first through third repeaters 422, 462, and 482. Thus, the present invention proposes a new frame format when the first through third repeaters 422, 462, and 482 are a wired/wireless bridge. All piconets and wired backbone that has or will be described later has a. single IP subnet. The wired/wireless bridge may act as a device or PNC within a piconet to which the wired/wireless bridge belongs.

FIG. 5 illustrates a modified format of a MAC frame defined in the IEEE 802.15.3 according to an exemplary embodiment of the present invention. In particular, the frame contains newly created 'PNID_b' information field 523 of a frame body 520 and 'Reserved' area 513 of a 'frame control' information field in a header 510.

Important information fields will now be briefly described.

A MAC frame 500 mainly consists of a frame body 520 and a header 510 containing various types of information of the MAC frame. The frame body 520 contains a payload 522 carrying protocol data unit (PDU) from a layer above a MAC layer in a protocol suite conforming to the IEEE 802.15.3 and a Frame Check Sum (FCS) information field 524 that indicates an error in transmission of a frame. For example, when the upper layer is an application layer, application data may be carried in the payload 522.

In addition, the header 510 contains a 'Piconet Identifier' (PNID) information field 514 that specifies an identifier able to identify the appropriate piconet, a 'SrcID' information field 518 to identify a device that transmits the MAC frame, and a 'DestID' information field 516 to identify a destination device that receives the MAC frame. An IEEE 802.15.3-compliant wireless communication scheme allows communication only between devices within the same piconet identified by the 'PNID' information field 514.

Thus, two 'PNID' information fields representing piconet IDs are needed to enable communication between devices within different piconets.

As an exemplary embodiment of the present invention, a separate 'PNID' information field 523 is placed in the frame body 520 and 'PNID' information contained in the frame body 520 is denoted by 'PNID_b' to distinguish itself from that contained in the header 510.

Meanwhile, each wired/wireless bridge needs to determine whether the final destination of a packet received on a piconet where it belongs is a device within the same or different piconet. To achieve this, the 'PNID' and 'PNID_b' information fields 514 and 523 may be predefined as source and destination piconet IDs, respectively, or vice versa. Alternatively, it is possible to use separate information indirectly indicating the source and destination piconet IDs, which is hereinafter called 'transfer mode information'.

The transfer mode information indicates whether a packet is transmitted to or received from devices belonging to the same or a different piconet. The same information may be specified in the 'Reserved' area 513 of the 'frame control' information field 512 contained in the header 510. The IEEE 802.15.3 defines the 'frame control' field and allocates 5 bits for the 'Reserved' area 513.

According to a exemplary embodiment of the present invention, 2 bits in the 'Reserved" area 513 are used to represent a piconet ID.

For example, when the 2 bits are represented by '01', the 'PNID' and 'PNID_b' information fields 514 and 523 may specify the designation and source piconet IDs, respectively. Thus, the 'SrcID' information field 518 and the 'DestID' information field 516 specify IDs of destination and source devices belonging to piconets identified by the 'PNID' and 'PNID_b' information fields 514 and 523, respectively.

In addition, when the 2 bits are represented by '10', the 'PNID' and 'PNID_b' information fields 514 and 523 may contain the source and designation piconet IDs, respectively. Thus, the 'SrcID' information field 518 and the 'DestID' information field 516 may contain IDs of source and destination devices belonging to piconets identified by the 'PNID' and 'PNID_b' information fields 514 and 523, respectively.

Lastly, when the 2 bits are represented by '11', the 'PNID' and 'PNID_b' information fields 514 and 523 may contain the same piconet ID, which means that transmission and reception of a packet is made between devices within the same piconet. Thus, the wired/wireless bridges 600 use only transfer mode information to determine whether the received wireless packets will be transmitted to other piconets or discarded. Thus, the 'SrcID' information field 518 and the 'DestID' information field 516 may contain IDs of source and destination devices belonging to piconets identified by the 'PNID' and 'PNID_b' information fields 514 and 523, respectively.

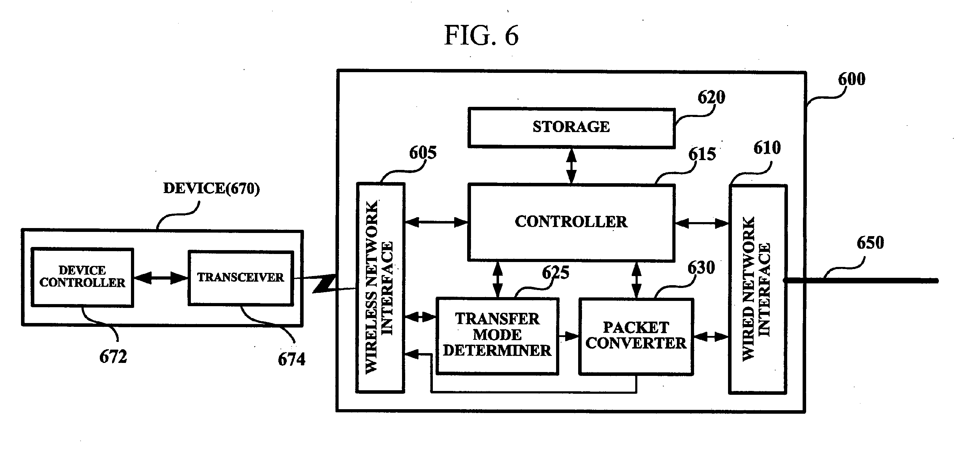

FIG. 6 is an exemplary diagram illustrating the configurations of a device 670 and a wired/wireless bridge 600 according to an embodiment of the present invention.

The wired/wireless bridge 600 includes a wireless network interface 605 that transmits and receives a wireless packet via a piconet, a wired network interface 610 that is connected to a wired network 650 and transmits and receives a wired packet, a transfer mode determiner 625 that receives the wireless packet from the wireless network interface 605 and determines a transfer mode based on information carried in the wireless packet, a packet converter 630 that converts the wireless packet into a wired packet in order to transmit the same to another piconet through the wired network 650, a storage 620 that stores ID information about other piconets and information about other wired/wireless bridges, and a controller 615 hat manages a process occurring among the wireless network interface 605, the wired network interface 610, the transfer mode determiner 625, the packet converter 630, and the storage 620. In this case, the transfer mode determiner 625, the packet converter 630, and the controller 615 may be implemented with a single integrated circuit chip.

The device 670 includes a device controller 672 that creates a wireless packet carrying a MAC protocol data unit consisting of a data frame region and an information frame region, and a transceiver 674 that transmits the created wireless packet.

The operation of the wired/wireless bridge 600 and the device 670 will now be described in detail.

For a better understanding of the present invention, reception of a wireless packet from a piconet by the wired/wireless bridge 600 and reception of a wired packet through the wired network 650 will now be described. The transfer mode information contains the same as that described with reference to FIG. 5. Furthermore, a process for allocating channel time conforms to the IEEE 802.15.3 standard, and it is assumed that channel time has been allocated before the wired/wireless bridge 600 receives the wireless packet from the piconet. The entire network system has the same architecture as shown in FIG. 4.

### 1. Reception of wireless packet

### (1) Communication between devices within the same piconet

For example, when the device-1_1 430 desires to communicate with the device-1_2 435, it is assumed that the device-1_1 430 and the first repeater 422 are the device 670 and the wired/wireless bridge 600 shown in FIG. 6, respectively. First, the device controller 672 of the device 670 sets the value of the 'Reserved' area 513 of the 'frame control' information field 512 contained in the header 510 of the MAC frame 500 to '11' and defines an ID of the first piconet 420 where the device 670 and the device-1_2 435 belong in the 'PNID_b' and 'PNID' information fields 523 and 514, respectively. The device controller 672 also specifies IDs identifying the device-1_2 435 and the device 670 in the 'DestID' information field 516 and the 'SrcID' information field 518, respectively.

The transceiver 674 of the device 670 then broadcasts the wireless packet carrying the MAC frame 500 defined as above, which is then transmitted to the wireless network interface 605 of the wired/wireless bridge 600. The transfer mode determiner 625 extracts the transfer mode information from the wireless packet and then discards the wireless packet since the transfer mode information is represented by '11'. Since the wired/wireless bridge 600 is used for communication with a different piconet, a method for communication within the same piconet 420 preferably complies with the IEEE 802.15.3 standard.

### (2) Communication between devices belonging to different piconets

For example, when the device-1_1 430 desires to communicate with the device-2_1 465 belonging to the second piconet 460, it is assumed that the device-1_1 430 and the first repeater 422 are the device 670 and the wired/wireless bridge 600 shown in FIG. 6, respectively.

First, the device controller 672 of the device 670 sets the value of the 'Reserved' area 513 of the 'frame control' information field 512 to '01' and defines an ID of the first piconet 420 where the device 670 belongs and an ID of the second piconet 460 where the device-2_1 465 belongs in the 'PNID_b' and 'PNID' information fields 523 and 514, respectively. The device controller 672 also specifies IDs identifying the device-2_1 465 and the device 670 in the 'DestID' information field 516 and the 'SrcID' information field 518, respectively.

The transceiver 674 of the device 670 then broadcasts the wireless packet carrying the MAC frame 500 set as above, which is then transmitted to the wireless network interface 605 of the wired/wireless bridge 600. The transfer mode determiner 625 extracts the transfer mode information from the wireless packet and then transmits the wireless packet to the packet converter 630 since the transfer mode information is represented by '01'. The packet converter 630 then converts the wireless packet to a wired packet that conforms to a protocol used to operate the wired network 650. The wired packet contains information on the header 510 and the payload 522 and is transmitted to the wired network interface 610 that in turn transmits the same to wired network 650. In this case, the wired packet may be multicasted or broadcasted or directly transmitted to a wired/wireless bridge in the second piconet 460.

### 2. Reception of wired packet

First, it is assumed that the device-1_1 430 and the first repeater 422 are the device 670 and the wired/wireless bridge 600 shown in FIG. 6, respectively.

The wired network interface 610 of the wired/wireless bridge 600 receives a wired packet from the wired network 650 and transmits the same to the packet converter 630. In this case, the packet converter 630 extracts the transfer mode information from the wired packet, and when the extracted transfer mode information is represented by '01', extracts 'PNID' information from the wired packet in order to check whether it is the same as ID information about a piconet where the wired/wireless bridge 600 belongs. If the two IDs are not identical, the packet converter 630 converts the wired packet into a wireless packet that is then transmitted to the wireless network interface 605. The wireless network interface 605 transmits the wireless packet to the target device 670. In this case, channel time must be allocated for data transmission.

Since the IEEE 802,15,3 standard dictates that only a transmitting device be allowed to request allocation of channel time, when transmitting and receiving devices belong to different piconets, a mechanism for allocating channel time for data reception is needed. In one embodiment, the structure of a 'MLME-CREATE-STREAM.request' message can be modified to perform this mechanism. The message is invoked upon receipt of a request for channel time allocation that has been made according to the IEEE 802.15.3 standard.

Since a conventional 'MLME-CREATE-STREAM.request' message contains only a 'TrgtID' parameter representing a receiving device in addition to information for channel time allocation, only a transmitting device is allowed to request channel time allocation. Thus, by attaching a parameter indicating whether a device that requests channel time allocation is a transmitting or receiving device to the 'MLME-CREATE-STREAM.request' message, the receiving device is then permitted to request the same. In this case, the receiving device receives various types of information on the channel time allocation in advance from a middleware or application operating at a layer above a MAC layer.

Meanwhile, as the structure of the 'MLME-CREATE-STREAM.request' has been modified, it is necessary to modify the format of a frame containing a command issued by the receiving device requesting channel time allocation from a PNC. More specifically, the IEEE 802.15-compliant channel time request command is comprised of multiple channel time request blocks, and each block has 'CTRq control' information field with a 1-bit 'Reserved' area. The 1-bit 'Reserved' area may contain bit information indicating whether a device that requests channel time allocation is a transmitting or receiving device.

By using the modified structures of the message and command, the receiving device is allowed to request channel time allocation.

Since each piconet connected to the wired network 650 is in a position to independently generate its own PNID information, the PNID information may be duplicated. Thus, to prevent the creation of this duplicate information, each wired/wireless bridge 600 periodically broadcast a packet carrying ID information on piconet where it belongs and device information and receives the broadcasted packet in order to store the same information on the storage 620 in the form of tables or update the same. If the duplicate PNID exists, the appropriate PNID value may be modified using a predetermined method. For example, when the PNID values of the first and second piconets 420 and 460 are equal to each other, the first and second wired/wireless bridges 600 corresponding to the first and second repeaters 422 and 462, respectively, inform PNCs within the first and second piconets 420 and 460 that they change the PNIDs.

Each wired/wireless bridge 600 may keep its own piconet periodically informed of information residing in the storage 620 so that the appropriate device becomes aware of ID information about other piconets and information about other devices. In addition, each wired/wireless bridge 600 may receive a packet that is periodically transmitted by a piconet where it belongs. If its PNID is modified, the modified PNID information is carried in the packet. Thus, in this case, the wired/wireless bridge 600 extracts the modified PNID information and stores the same on the storage 620.

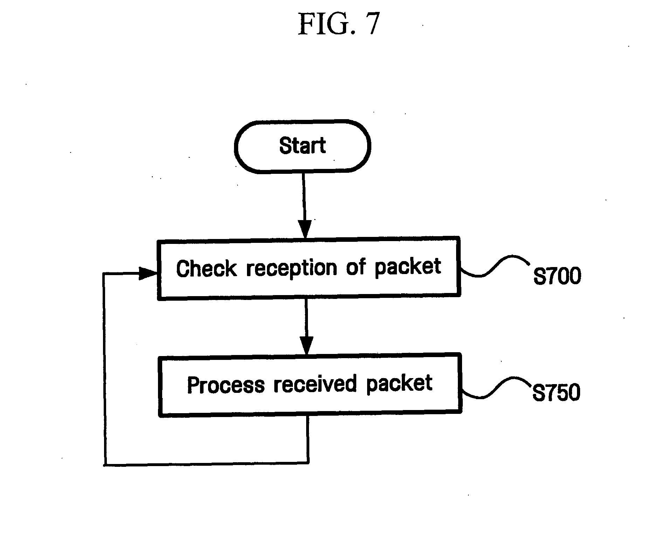

FIG. 7 is a schematic flowchart illustrating the operation of a repeater according to an embodiment of the present invention.

First, in step S700, the repeaters 422, 462, and 482 periodically check whether a wired or wireless packet has been received. The check may be performed by a processor that operates when the repeaters 422, 462, and 482 begin their operation. When an event or interrupt indicative of reception of the wired or wireless packet occurs, the processor creates a child-processor that processes the received packet based on information contained in the packet in step S750. The child processor informs the parent processor that it finishes processing of the received packet and terminates. That is, from the standpoint of software, a module for checking reception of a packet operates separately from a module for processing the received packet.

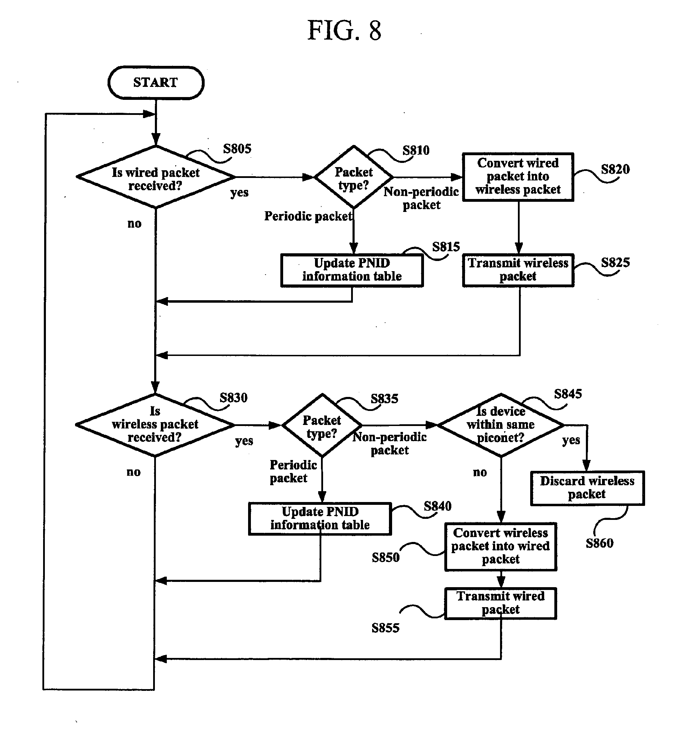

FIG. 8 is a detailed flowchart illustrating the operation of a repeater according to an embodiment of the present invention.

In step S805 or S830, the controller 615 shown in FIG. 6 periodically checks whether a packet has been received by the wired network interface 610 or the wireless network interface 605. Although FIG. 8 has illustrated that reception of a wireless packet is checked after reception of a wired packet has been checked for easier explanation, the order of the process may be reversed.

In step S810, once the wired packet has been received, the packet converter 630 or the controller 615 checks the type of the received packet. When the packet is periodically received and contains PNID information broadcasted by each repeater 422, 462, or 482, the controller 615 updates a PNID information table stored for each piconet on the storage 620 using the PNID information in step S815. Then, in step S830, the controller 615 checks whether the wireless packet has been received.

Conversely, when the packet received in the step S810 is a non-periodically received packet transmitted by a device belonging to a different piconet, the packet converter 630 converts the wired packet into a wireless packet in step S820, and the wireless network interface 605 transmits the wireless packet to a destination device during preallocated channel time in step S825. Then, in step S830, the controller 615 checks whether the wireless packet has been received.

In step S835, once the wireless packet has been received, the transfer mode determiner 625 or the controller 615 checks the type of the wireless packet. When the received packet is periodically received and contains PNID information broadcasted by a PNC, the controller 615 updates a PNID information table stored on the storage 620 using the PNID information in step S840. Then, in step S805, the controller 615 checks whether a wired packet has been received.

Conversely, when the packet received in the step S833 is a non-periodically received packet, it is checked whether a device has transmitted the packet that is intended for transmission to another device within the same piconet using the transfer mode information in step S845. When the packet is intended for transmission to another device within the same piconet, the packet is discarded in step S860. A method for communication within the same piconet preferably complies with the IEEE 802.15.3 standard.

When the packet is intended for transmission to a device belonging to a different piconet, the packet converter 630 converts the wireless packet into a wired packet in step S850, and the wired network interface 610 transmits the wired packet to a repeater within a destination piconet in step S855. Then, in step S805, the controller 615 checks whether a wired packet has been received.

In concluding the detailed description, those skilled in the art will appreciate that many variations and modifications can be made to the exemplary embodiments without substantially departing from the principles of the present invention. Therefore, the disclosed exemplary embodiments of the invention are used in a generic and descriptive sense only and not for purposes of limitation.

The present invention allows communication between wireless devices belonging to different wireless networks using a wired backbone.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A network device configured to allow at least one first network communication device (430) belonging to a first wireless network (420) to communicate with at least one second network communication device (465) belonging to a second wireless network (460), the network device (430) comprising:
a controller that creates a wireless packet carrying a predetermined protocol data unit comprising a data frame region and an information frame region, the protocol data unit including first and second device identification (ID) information identifying the at least one first network communication device (430) and the at least one second network communication device (465), respectively, and first and second network ID information identifying the first and second wireless networks (420,460), respectively; and
a transmitter that transmits the created wireless packet.

2. The network device of claim 1, wherein the protocol data unit comprises a medium access control (MAC) protocol data unit (500) for controlling access between the at least one first network communication device (430) and the at least one second network communication device (465).

3. The network device of claim 1 or 2, wherein the information frame region includes the first and second device ID information and the first network ID information, and the data frame region comprises the second network ID information.

4. The network device of claim 1, 2 or 3, wherein the wireless packet is compliant with the IEEE 802.1.5.3 standard.

5. The network device of any one of claims 1-4, wherein the protocol data unit further comprises transfer mode information indicating whether the at least one first network communication device (430) and the at least one second network communication device (460) belong to the same network.

6. The network device of claim 5, wherein the transfer mode information is contained in the information frame region.

7. The network device of claim 5 or 6, wherein the transfer mode information includes a first transfer mode in which the at least one first network communication device (430) and the at least one second network communication device (465) have a same network ID information, and a second transfer mode in which the at least one first network communication device and the at least one second network communication device have different network ID information.

8. A network bridging device configured to allow at least one first network communication device (430) belonging to a first wireless network (420) to communicate with at least one second network communication device (465) belonging to a second wireless network (460) connected via a wired network (440), the network bridging device comprising:
a wireless network interface (605) that receives a wireless packet carrying a predetermined protocol data unit comprising a data frame region and an information frame region from the at least one first network communication device (430), the protocol data unit including first and second device identification (ID) information identifying the at least one first network communication device (430) a.nd the at least one second network communication device (465), respectively, and first and second network ID information identifying the first and second wireless networks (420,460), respectively;
a controller (615) that converts the wireless packet into a wired packet that conforms to a protocol used to operate the wired network (440); and
a wired network interface (610) that transmits the wired packet to the wired network (440).

9. The network bridging device of claim 8, wherein the protocol data unit comprises a medium access control (MAC) protocol data unit for controlling an access between the at least one first network communication device (430) and the at least one second network communication device (465).

10. The network bridging device of claim 8 or 9, wherein the information frame region includes the first and second device ID information and the first network ID information, and the data frame region comprises the second network ID information.

11. The network bridging device of claim 8, 9 or 10, wherein the wireless packet is compliant with IEEE 802.15.3 standard.

12. The network bridging device of any one of claims 8-11, wherein the protocol data unit further includes transfer mode information indicating whether the at least one first network communication device (430) and the at least one second network communication device (465) belong to a same network.

13. The network bridging device of claim 12, wherein the transfer mode information is contained in the information frame region.

14. The network bridging device of claim 12 or 13, wherein the transfer mode information includes a first transfer mode in which the at least one first network communication device (430) and the at least one second network communication device (465) have a same network ID information and a second transfer mode in which the at least one first network communication device (430) and the at least one second network communication device (465) have different network ID information.

15. The network bridging device of claim 14, wherein the controller discards the wireless packet received from the wireless network interface (605) if transfer mode information is the first transfer mode.

16. The network bridging device of claim 14 or 15, wherein the controller converts the wireless packet received from the wireless network interface into the wired packet that conforms to the protocol used to operate the wired network if the transfer mode information is a second transfer mode.

17. The network bridging device of claim 8, wherein the wired network interface (610) receives a wired packet from the wired network (440), the controller (615) converts the received wired packet into a wireless packet that conforms to a protocol used to operate the first wireless network (420), and the wireless network interface (605) transmits the wireless packet to the at least one first network communication device (430).

18. A network communication method comprising:
transmitting, at a wireless device, a wireless packet comprising a predetermined protocol data unit comprising a data frame region and an information frame region, wherein the protocol data unit comprises first device identification (ID) information identifying at least one first wireless network communication device (430) that transmits the wireless packet, second device ID information identifying at least one second wireless network communication device (465) that receives the wireless packet, and first and second network ID information identifying first and second wireless networks (420, 460) where the at least one first network communication device (430) and the at least one second network communication device (465) belong, respectively;
receiving the wireless packet in a bridging device connected to a wired network;
converting the wireless packet into a wired packet that conforms to a protocol used to operate the wired network (440) in the bridging device; and
transmitting the wired packet to the wired network.

19. The network communication method of claim 18, wherein the protocol data unit comprises a medium access control (MAC) protocol data unit for controlling an access between the at least one first network communication device (430) and the at least one second network communication device (465).

20. The network communication method of claim 18 or 19, wherein the information frame region includes the first and second device ID information and the first network ID information, and the data frame region comprises the second network ID information.

21. The network communication method of claim 18, 19 or 20, wherein the wireless packet is compliant with IEEE 802.15.3 standard.

22. The network communication method of any one of claims 18-21, wherein the protocol data unit further includes transfer mode information indicating whether the at least one first network communication device (430) and the at least one second network communication device (465) belong to a same network.

23. The network communication method of claim 22, wherein the transfer mode information is contained in the information frame region.

24. The network communication method of claim 22 or 23, wherein the transfer mode information includes a first transfer mode in which the at least one first network communication device (430) and the at least one second network communication device (465) have the same network ID information, and a second transfer mode in which the at least one first network communication device (430) and the at least one second network communication, device (465) have different network ID information.

25. The network communication method of claim 22, 23 or 24, wherein if the transfer mode information is the second transfer mode, the converting comprises causing the bridging device to convert the wireless packet into the wired packet that conforms to the protocol used to operate the wired network (440).
